# EUROPÄISCHE PATENTSCHRIFT

(11) **EP 1 559 605 B1**
(45) Veröffentlichungstag und Bekanntmachung des Hinweises auf die Patenterteilung: **15.08.2007**
(21) Anmeldenummer: 05000273.2
(22) Anmeldetag: 07.01.2005
(51) Int. Cl.: B60K 15/04

(54) **Verlustsicherung für einen Behälterdeckel**
Securing means for a container cap
Dispositif antiperte pour bouchon de réceptacle

(30) Priorität: 30.01.2004 DE 202004001485 U
(43) Veröffentlichungstag der Anmeldung: 03.08.2005
(73) Patentinhaber: Gerdes GmbH, 50170 Kerpen (DE)
(72) Erfinder: Gerdes, Ralf, 50935 Köln (DE)
(74) Vertreter: Bungartz, Klaus Peter

(56) Entgegenhaltungen:
- DE-U1- 20 018 750
- US-A- 5 732 841
- PATENT ABSTRACTS OF JAPAN Bd. 2000, Nr. 24, 11. Mai 2001 (2001-05-11) & JP 2001 180306 A (HYUNDAI MOTOR CO LTD), 3. Juli 2001 (2001-07-03)
- PATENT ABSTRACTS OF JAPAN Bd. 2000, Nr. 24, 11. Mai 2001 (2001-05-11) & JP 2001 191803 A (TOYODA GOSEI CO LTD), 17. Juli 2001 (2001-07-17)

## Beschreibung

Die Erfindung betrifft eine Verlustsicherung für einen Behälterdeckel eines Fahrzeugs, insbesondere für einen Kraftstoffbehälter, mit einem ersten Ende, das über ein erstes Verbindungselement an dem Behälterdeckel angebracht ist, einem zweiten Ende, das über ein zweites Verbindungselement am Fahrzeug angebracht ist, und einem zwischen dem ersten und dem zweiten Ende angeordneten Bandstück, wobei das zweite Verbindungselement von einem Zapfen und wenigstens einem Verankerungsfortsatz gebildet ist.

Die Erfindung betrifft ferner eine Verlustsicherung für einen in einen Stutzen eingeschraubten Behälterdeckel eines Kraftstoffbehälters eines Fahrzeugs, mit einem ersten Ende, das über ein erstes Verbindungselement an dem Behälterdeckel angebracht ist, einem zweiten Ende, das über ein zweites Verbindungselement am Fahrzeug angebracht ist, und einem zwischen dem ersten und dem zweiten Ende angeordneten Bandstück, wobei das erste Verbindungselement um die Drehachse des Behälterdeckels drehbar mit dem Behälterdeckel verbunden ist und von einer Ringöse und von einem mit dem Bandstück und der Ringöse verbundenen Anker gebildet ist, wobei die Ringöse im inneren Bereich eine Ausnehmung sowie eine die Ausnehmung mit der äußeren Seite der Ringöse verbindende Einstecknut aufweist, in die der Anker einsetzbar ist.

Behälterdeckel der eingangs genannten Art werden seit langem verwendet. So weisen insbesondere Kraftstoffbehälterdeckel bei vielen Fahrzeugen eine band- bzw. schnurähnliche Verlustsicherung auf, bei denen ein erstes Ende mit dem Behälterdeckel und ein zweites Ende mit dem Kraftfahrzeug verbunden ist. Der Behälterdeckel ist dann selbst im vom Behälter gelösten Zustand nicht vom Kraftfahrzeug zu entfernen.

Die Befestigung der Verlustsicherung am Kraftfahrzeug und das Verbindungselement selbst müssen jedoch vielen Anforderungen genügen, sowohl im vielen Jahre währenden Betrieb des Kraftfahrzeugs als auch bereits bei der Herstellung und deren Kosten, bei der Qualität sowie dem Qualitätseindruck und bei der Montage. So ist ein besonders fester Sitz des Verbindungselementes trotz der üblicher Weise stark variierenden Toleranzen etwa einer Aufnahmebohrung im Kraftfahrzeug für ein solches Verbindungselement für einen guten Qualitätseindruck wünschenswert. Auch eine einstückige Ausführung des zweiten Verbindungselements ist aus Produktionsgesichtspunkten vorteilhaft, da dies Arbeitsvorgänge bei Herstellung und Montage und somit Kosten spart sowie eine hohe Stabilität bzw. eine hohe Abreißkraft gewährleistet.

Die DE 200 18 750 U1 offenbart einen Behälterdeckel mit einem ersten Verbindungselement, dass um die Drehachse des Behälterdeckels drehbar ist und von einer Ringöse und einem mit einem Bandstück und einer Ringöse verbundenen Anker gebildet ist. Der Anker wird auch hier in eine innere Ausnehmung der Ringöse eingesetzt und durch eine Einstecknut vom Inneren der Ringöse herausgeführt. Allerdings besteht hierbei das Problem, dass beim Einsetzen des Ankers in die Ausnehmung in der Ringöse von einem Montagearbeiter Fehler gemacht werden können, denn der Anker kann in mehreren Positionen in die Ringöse eingesetzt werden, wodurch die Ausrichtung des zweiten Verbindungselements, worauf es in vielen Fällen ankommt, fehlerhaft sein kann. Da Behälterdeckel in der Regel durch Steck- und Schnappverbindungen irreversibel zusammengesetzt sind, ist ein solcher Fehler nicht mehr zu beheben und der Behälterdeckel muss entsorgt werden.

Hinsichtlich des Materials, insbesondere des Materials des zweiten Verbindungselements, besteht das Problem, dass längere Transportwege vom Zulieferer zum Fahrzeughersteller Einwirkungen auf das Material haben. Dies gilt insbesondere bei Kunststoffen, die bei längeren Transporten in Flugzeugen extremer Kälte ausgesetzt sind, wodurch die Materialeigenschaften negativ beeinflusst werden können.

Aus der US 5 732 841 1 ist ebenfalls eine Verlustsicherung für einen Behälterdeckel bekannt, deren Ende eine ösenartige Ringaufnahme aufweist, die über eine Nietverbindung mit der Karosserie verbunden ist. Die JP 2001 180306 A zeigt eine vergleichbare Lösung. Beide Ausgestaltungen weisen den Nachteil auf, dass ein weiteres Bauteil notwendig ist, nämlich eine in die Ringöse einzusetzende Niet- oder Schraubverbindung, die zur Befestigung der Verlustsicherung in die Karosserie eingedrückt werden muss.

Aus der JP 2001 191803 A (beinhaltet die Merkmale des Oberbegriffs des unabhängigen Anspruchs 1) ist eine Verlustsicherung bekannt, die an dem fahrzeugseitigen Ende über eine dünne Verbindung einen nietähnlichen Stopfen aufweist, der zur Befestigung der zunächst an die Verlustsicherung angeklappt und dann durch eine Ringöse in der Verlustsicherung in die Karosserie eingedrückt werden kann. Zur sicheren der Befestigung weist die Verlustsicherung dabei am karosserieseitigen Endbereich ein dübelartiges Spreizelement auf, das durch den Stopfen auseinandergedrückt wird. Diese Ausgestaltung weist zum einen den Nachteil auf, dass die Verbindung zwischen dem Stopfen und der Verlustsicherung nach Montage der Verlustsicherung erhalten bleibt, obwohl sie eigentlich dann nie mehr gebraucht wird und zum anderen über einen vergleichsweise aufwendigen Herstellungsprozess, zum einen die dübelartige Verlängerung und zum anderen der spreizende Stopfen mit der Verlustsicherung zusammen hergestellt werden muss.

Aufgabe der Erfindung ist es daher, eine Verlustsicherung für einen Behälterdeckel eines Kraftfahrzeugs zu schaffen, welche die eingangs genannten Nachteile überwindet.

Die Aufgabe wird ferner dadurch gelöst, dass der Zapfen an seiner Außenseite wenigstens eine Aufnahmenut aufweist und der Verankerungsfortsatz den Zapfen in einer Richtung senkrecht zu seiner Längsachse überragt, elastisch mit dem Zapfen verbunden und in die Aufnahmenut hineindrückbar ist. Dies bewirkt, dass trotz des Überstehens des Verankerungsfortsatzes bei bestimmungsgemäßen Sitz des zweiten Verbindungselements etwa in einer am Kraftfahrzeug angeordneten, dafür vorgesehenen Bohrung, der Durchmesser des Ankers wenig Spiel in der Bohrung hat und ein fester, einen guten Qualitätseindruck hinterlassender Sitz gewährleistet ist. Auch auf das zweite Verbindungselement wirkende Vibrationen werden wirkungsvoller aufgefangen. Hinzu kommt, dass hierdurch eine einstückige Ausführung möglich wird, die eine hohe Abreißkraft gewährleistet.

Zur geeigneten Anordnung von Verankerungsfortsatz und Aufnahmenut erstreckt sich die Aufnahmenut vorzugsweise in axialer Richtung des Zapfens. Hierdurch wird auch die Positionierung und konstruktive Anordnung eines zur Herstellung benötigten Werkzeugs etwa beim Spritzgussverfahren wesentlich erleichtert.

Um eine ausreichende Festigkeit und ein preiswertes Herstellungsverfahren gewährleisten zu können, ist vorgesehen, dass der Zapfen und der Verankerungsfortsatz einstückig ausgebildet sind. Idealer Weise ist auch das Bandstück und das zweite Verbindungselement einstückig ausgebildet, so dass die Verlustsicherung zumindest auf der Seite des zweiten Verbindungselements nur aus einem Teil besteht.

In einer weiteren vorteilhaften Ausgestaltung der Erfindung ist vorgesehen, dass der Zapfen und der Verankerungsfortsatz aus demselben Material, insbesondere aus Polyoxymethylen (POM) oder einem anderen Kunststoff, gefertigt sind. Bei einer ebenfalls einstückigen Ausführung des zweiten Verbindungselements und des Bandstücks sind auch diese aus demselben Material, insbesondere aus Polyoxymethylen (POM) oder einem anderen Kunststoff, gefertigt.

Vorzugsweise weist der Kunststoff eine Shorehärte zwischen 40 und 80 aufweist. Diese Härte ist ausreichend elastisch und gewährt dennoch eine ausreichend Festigkeit. Ferner werden hierdurch die eingangs genannten Nachteile, die bei einem längeren Transport bei niedrigen Temperaturen entstehen können, wirksam vermieden.

Zur Steigerung der Festigkeit der Verankerung ist es vorteilhaft, dass mehrere Verankerungsfortsätze vorgesehen sind, wobei für jeden Verankerungsfortsatz eine Aufnahmenut im Zapfen vorhanden ist. Die Anzahl der Verankerungsfortsätze wird sich dabei etwa bei einem zylindrischen Zapfen nach dem Durchmesser des Zapfens richten. Im Regelfall wird die Anzahl der Verankerungsfortsätze zwei, drei, vier, fünf, sechs, sieben oder acht betragen. Sinnvoller Weise ist das zweite Verbindungselement dann derart ausgestaltet, dass die Verankerungsfortsätze und die Aufnahmenuten gleichmäßig über den Umfang des Zapfens angeordnet sind, um eine gleichmäßige Kräfteverteilung zu ermöglichen. Hierzu sind die Verankerungsfortsätze und die Aufnahmenuten in besonders vorteilhafter Weise konzentrisch zur Zapfenmittelachse angeordnet sind.

Um eine gesteigerte Sicherheit gegen ein Herausziehen der Verlustsicherung aus ihrer Befestigung am Fahrzeug zu ermöglichen, ist das zweite Verbindungselement so gestaltet, dass nach Einstecken des zweiten Verbindungselements durch eine Kraft, die entgegen der Einsteckrichtung des zweiten Verbindungselements auf dieses wirkt, der Verankerungsfortsatz unter Vergrößerung der wirksamen Querschnittsfläche des zweiten Verbindungselements auseinandergespreizt ist und so durch Bildung eines Formschlusses einer Bewegung des zweiten Verbindungselements entgegen der Einsteckrichtung entgegensteht.

Um zu verhindern, dass das zweite Verbindungselement beliebig weit in Einsteckrichtung bewegt werden kann, beispielweise in einen hinter einer Aufnahmebohrung liegenden Hohlraum, weist der Zapfen in seinem oberen Bereich eine Erweiterung auf, welche die Beweglichkeit des zweiten Verbindungselements in Einsteckrichtung begrenzt.

Eine weitere vorteilhafte Ausgestaltung ist dadurch gekennzeichnet, dass der Anker des ersten Verbindungselements derart ausgestaltet ist, das er relativ zur Längsachse des Bandstücks in genau einer Winkelstellung oder in einer beliebigen Winkelstellung in die Ringöse einsetzbar ist. Hierdurch ist gewährleistet, dass beim Einsetzen des Ankers in die Ringöse eine fehlerhafte Montage und eine daraus folgende fehlerhafte Ausrichtung des zweiten Verbindungselements ausgeschlossen werden kann.

Wie auch beim zweiten Verbindungselement ist beim ersten Verbindungselement eine einstückige Ausführung sinnvoll. Allerdings ist dies durch die zweiteilige Ausführung des ersten Verbindungselements mit Ringöse und Anker erschwert. Vorzugsweise sind aber zumindest der Anker und das Bandstück einstückig ausgebildet und aus demselben Material, insbesondere aus Polyoxymethylen (POM) oder einem anderen Kunststoff, gefertigt. Der Einfachheit halber kann aber vorgesehen sein, dass der Anker und die Ringöse aus demselben Material, insbesondere aus Polyoxymethylen (POM) oder einem anderen Kunststoff, gefertigt sind. Auch hier weist das Material vorteilhaft eine Shorehärte zwischen 40 und 80 auf.

Eine in besonderer Weise vorteilhafte Ausgestaltung ergibt sich selbstverständlich bei einer einfindungsgemäßen Verlustsicherung, welche die Vorteile des ersten Verbindungselements mit denen des zweiten Verbindungselements verbindet, in dem erstes und zweites Verbindungselement nach der erfindungsgemäßen Lehre ausgestaltet sind.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Figur 1: einen Behälterdeckel mit einer daran angebrachten erfindungsgemäßen Verlustsicherung,
- Figur 2: eine mögliche Ausgestaltung der Verlustsicherung, bei welcher der Anker des ersten Verbindungselement in nur einer Winkelposition in die Ringöse einsetzbar ist und das zweite Verbindungselement zwei Verankerungsfortsätze aufweist, wobei die Längsachse des Zapfens mit der Längsachse des Bandstücks zusammenfällt,
- Figur 3: den Schnitt C-C durch das erfindungsgemäße zweite Verbindungselement in Figur 2,
- Figur 4: eine mögliche Ausgestaltung der Verlustsicherung, bei welcher der Anker des ersten Verbindungselement in beliebigen Winkelposition in die Ringöse einsetzbar ist und das zweite Verbindungselement vier Verankerungsfortsätze aufweist, wobei die Längsachse des Zapfens rechtwinklig auf der Längsachse des Bandstücks steht,
- Figur 5: den Schnitt B-B durch das erfindungsgemäße zweite Verbindungselement in Figur 4,
- Figur 6: den Schnitt A-A durch das erfindungsgemäße zweite Verbindungselement in Figur 4.

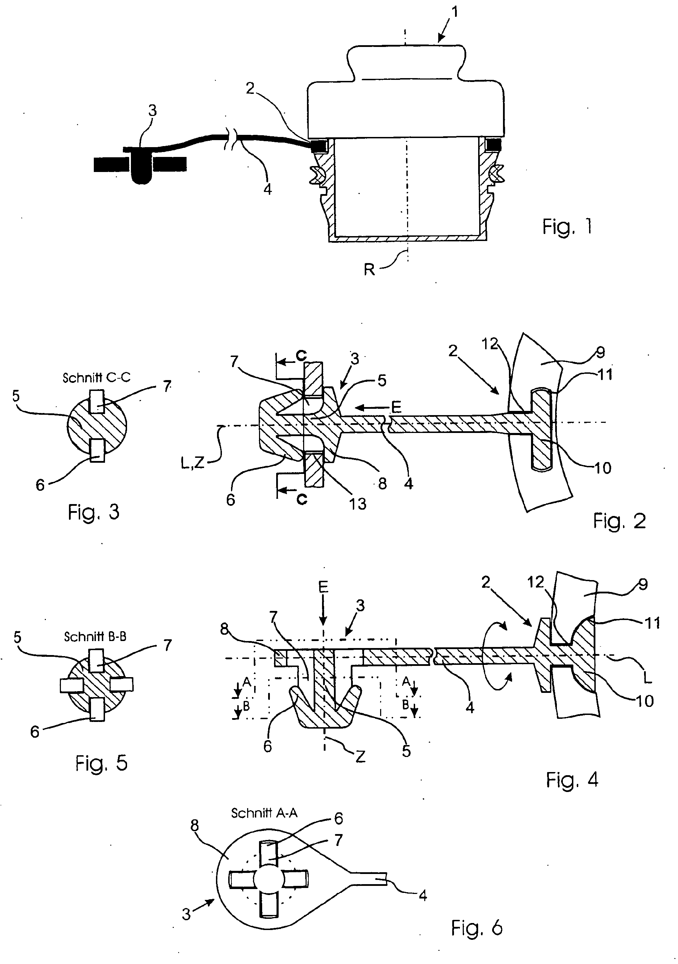

Figur 1 zeigt einen Behälterdeckel 1 mit einer daran angebrachten, erfindungsgemäßen Verlustsicherung in einer schematischen Gesamtansicht. Ein erstes Ende ist dabei mit einem ersten Verbindungselement 2 an dem Behälterdeckel 1 angebracht, wobei es um die Drehachse R des Behälterdeckels 1 drehbar ist und sich somit beim Ein- oder Ausdrehen des Behälterdeckels 1 nicht mitdreht. Ein zweites Verbindungselement 3 ist an einem zweiten Ende angeordnet und in einer Aufnahmebohrung 13 angebracht, die sich beispielsweise in der Karosserie eines Fahrzeugs befinden kann. Zwischen erstem und zweitem Ende ist ein Bandstück 4 vorgesehen.

Figur 2 zeigt eine mögliche Ausgestaltung der Verlustsicherung im Detail. Das erste Verbindungselement 2 weist einen Anker 10 und eine Ringöse 9 auf, wobei der Anker 10 in eine Ausnehmung 11 der Ringöse 9 eingesetzt und durch eine Einstecknut 12 aus der Ringöse 9 herausgeführt. Der Anker 10 weist zur Verankerung zwei sich auswärts erstreckende Arme auf. Diese sind dabei unterschiedlich lang ausgestaltet und die Ausnehmung 11 in der Ringöse 9 ist diesen Armen angepasst, so dass sich der Anker nur in einer einzigen Winkelstellung relativ zur Langsachse L des Bandstücks 4 in die Ausnehmung 11 einsetzen lässt. Die innere Wandung der Ringöse 9 ist dabei von der Ausnehmung 11 nicht unterbrochen, so dass der Anker 10 sicher in der Ausnehmung 11 der Ringöse 9 eingesetzt werden kann, ohne dabei in Richtung der Längsachse L des Bandstücks 4 verschieblich zu sein.

An seinem zweiten Ende weist die Verlustsicherung ein zweites Verbindungselement 3 auf, das von einem Zapfen 5 und von zwei Verankerungsfortsätzen 6 gebildet ist. Die Verankerungsfortsätze 6 ragen dabei in einer Richtung senkrecht zur Längsachse Z des Zapfens 5 über diesen hinaus. Beim Einstecken des Zapfens in eine Aufnahmebohrung 13 werden die Verankerungsfortsätze 6 in Einsteckrichtung E eine Aufnahmenut 7 gedrückt. Nachdem die Verankerungsfortsätze 6 die Aufnahmebohrung 13 durchdrungen haben, federn sie aufgrund ihrer Elastizität wieder zurück und machen ein erneutes Herausziehen des zweiten Verbindungselements 3 aus der Aufnahmebohrung 13 nur durch Ziehen an dem Bandstück 4 entgegengesetzt der Einsteckrichtung E unmöglich. Vielmehr werden sich die Verankerungsfortsätze 6 rückseitig an das, die Aufnahmebohrung 13 umgebende Material anlegen und nach außen auseinandergespreizt werden.

Um auch das ein weiteres Verschieben des zweiten Verbindungselements 3 in Einsteckrichtung E zu vermeiden und ferner eine geeignete Fixierung des zweiten Verbindungselements 3 in der Aufnahmebohrung 13 zu gewährleisten, weist der Zapfen 5 in seinem oberen Bereich eine Erweiterung 8 auf. Der Minimalabstand zwischen Erweiterung 8 und Verankerungsfortsatz 6 ist sinnvoller Weise so gewählt, dass die Beweglichkeit des zweiten Verbindungselements 3 weitestgehend eingeschränkt ist, ohne dabei das Zurückfedern der Verankerungsfortsätze 6 nach dem Durchdringen der Aufnahmebohrung 13 zu gefährden.

Figur 3 zeigt den in Figur 2 angedeuteten Schnitt C-C. Dabei ist erkennbar, dass der wirksame Zapfendurchmesser bis auf die Stellen, an denen der Zapfen 5 die Aufnahmenuten 7 aufweist, der ein Zylinder ist. Somit kann das zweite Verbindungselement 3 optimal an den Durchmesser der Aufnahmebohrung angepasst werden und eine radiale Beweglichkeit des zweiten Verbindungselements 3 innerhalb der Aufnahmebohrung 13 weitestgehend vermieden werden. Selbstverständlich ist die Ausgestaltung des Zapfens dabei nicht auf die Form eines Zylinders beschränkt. Auch mit drei-, vier- oder vieleckige Ausführungen ist die Erfindung realisierbar. Dies kann zum Beispiel dann sinnvoll sein, wenn ein Verdrehen des zweiten Verbindungselements 3 in der einer Bohrung nicht möglich sein soll.

Figur 4 zeigt eine weitere Ausführungsform der erfindungsgemäßen Verlustsicherung. Im Gegensatz zu der in Figur 2 dargestellten Ausführungsform ist hier der Anker 10 des ersten Verbindungselements 2 rotationssymmetrisch zur Längsachse L des Bandstücks 4 ausgeführt. Hierdurch ergeben sich unendliche viele Winkelstellungen, in denen der Anker 10 in die Ausnehmung 11 der Ringöse 9 einsetzbar ist, wodurch ein Montagefehler sicher zu vermeiden ist, da es auf die Ausrichtung nicht mehr ankommt.

Ferner ist hier die innere Wandung der Ringöse 9 durch die Ausnehmung 11 unterbrochen, was Vorteile bei der Herstellung der Spritzgusswerkzeuge hat und Kosten spart. Daher weist das Bandstück 4 an seinem Übergang zum Anker 10 einen sich auswärts erstreckenden Steg auf, der eine Verschieblichkeit der Verlustsicherung unter anderem zur sicheren Montage verhindert. Die Längsachse Z des Zapfens 5 des zweiten Verbindungselements 3 ist hier senkrecht zur Längsachse L des Bandstücks 4 ausgerichtet. Diese Ausführung kann insbesondere dann vorteilhaft sein, wenn eine geringe Bauhöhe des zweiten Verbindungselements 3 und des Bandstück 4 notwendig ist, denn bei der hier gezeigten Ausführungsform ragt das zweite Verbindungselement 3 und das Bandstück nur unwesentlich über das eine Aufnahmebohrung 13 bildende Material hinaus (siehe auch Figur 1).

Analog zu Figur 3 zeigt Figur 5 einen Schnitt B-B durch den Zapfen 5. Auch hier ist zu erkennen, dass trotz Verdopplung der Verankerungsfortsätze 6 im Gegensatz zur Ausführung gemäß Figur 3 der wirksame Zapfendurchmesser beibehalten werden kann. Jedoch bildet eine größere Anzahl von Verankerungsfortsätze 6 oft Vorteile hinsichtlich der Belastbarkeit der Verlustsicherung. Je nach Durchmesser und Anforderungen an die Belastbarkeit, die Kosten der Herstellung und die Einfachheit der konstruktiven Ausgestaltung werden sich dem Fachmann verschiedene Ausgestaltungen anbieten.

Figur 6 zeigt eine Draufsicht einer alternativen Ausgestaltung einer Erweiterung 8 in Anlehnung an die in Figur 2 dargestellte am zweiten Verbindungselement 3 befindliche Erweiterung 8. Hier erstreckt sich das Bandstück senkrecht zur Längsachse L des Zapfens 5 zur Vermeidung einer unnötig hohen Bauhöhe.

Entgegen der Ausführungsform gemäß Figur 2 und 3 ist in den Figuren 4, 5 und 6 zu erkennen, dass sich hier die Aufnahmenuten 7 von oben durch die Erweiterung des Zapfens erstrecken, was durch die Gestaltung und das Heranführen des Spritzgusswerkzeugs an den späteren Zapfen 5 bedingt ist. Während nämlich in den Figuren 4, 5 und 6 der hierfür relevante Teil des Werkzeugs von oben herangeführt wird, wird er bei den Ausführungen gemäß der Figuren 2 und 3 seitlich herangeführt. In allen hier dargestellten Fällen erstrecken sich die Aufnahmenuten 7 jedoch in axialer Richtung des Zapfens 5. Es sei jedoch angemerkt, dass auch andere, etwa sich radial erstreckende Nuten oder einfache Ausnehmungen denkbar sind und zur Erfindung zugehörig mitbeansprucht werden.

### Bezugszeichenliste:

- 1: Behälterdeckel
- 2: Erstes Verbindungselement
- 3: Zweites Verbindungselement
- 4: Bandstück
- 5: Zapfen
- 6: Verankerungsfortsatz
- 7: Aufnahmenut
- 8: Erweiterung
- 9: Ringöse
- 10: Anker
- 11: Ausnehmung
- 12: Einstecknut
- 13: Aufnahmebohrung

- E: bestimmungsgemäße Einsteckrichtung des zweiten Verbindungselements 3
- L: Längsachse des Bandstücks 4
- R: Drehachse des Behälterdeckels 1
- Z: Längsachse des Zapfens 5

## Patentansprüche

1. Verlustsicherung für einen Behälterdeckel (1) eines Fahrzeugs, insbesondere für einen Kraftstoffbehälter, mit einem ersten Ende, das über ein erstes Verbindungselement (2) an dem Behälterdeckel angebracht ist, einem zweiten Ende, das über ein zweites Verbindungselement (3) am Fahrzeug angebracht ist, und einem zwischen dem ersten und dem zweiten Ende angeordneten Bandstück (4), wobei das zweite Verbindungselement von einem Zapfen (5) und wenigstens einem Verankerungsfortsatz (6) gebildet ist, **dadurch gekennzeichnet, dass**
der Zapfen (5) an seiner Außenseite wenigstens eine Aufnahmenut (7) aufweist und der Verankerungsfortsatz (6) den Zapfen in einer Richtung senkrecht zur Zapfenmittelachse (Z) überragt, elastisch mit dem Zapfen (5) verbunden und in die Aufnahmenut (7) hineindrückbar ist.

2. Verlustsicherung nach Anspruch 1, **dadurch gekennzeichnet, dass** die Aufnahmenut (7) sich in axialer Richtung des Zapfens (5) erstreckt.

3. Verlustsicherung nach Anspruch 1 oder 2, **dadurch gekennzeichnet, dass** der Zapfen (5) und der Verankerungsfortsatz (6) einstückig ausgebildet sind.

4. Verlustsicherung nach einem der vorhergehenden Ansprüche, **dadurch gekennzeichnet, dass** das zweite Verbindungselement (3) und das Bandstück (4) einstückig ausgebildet sind.

5. Verlustsicherung nach einem der vorhergehenden Ansprüche, **dadurch gekennzeichnet, dass** der Zapfen (5) und der Verankerungsfortsatz (6) aus demselben Material, insbesondere aus Polyoxymethylen (POM) oder einem anderen Kunststoff, gefertigt sind.

6. Verlustsicherung nach einem der vorhergehenden Ansprüche, **dadurch gekennzeichnet, dass** das zweite Verbindungselement (3) und das Bandstück (4) aus demselben Material, insbesondere aus Polyoxymethylen (POM) oder einem anderen Kunststoff, gefertigt sind.

7. Verlustsicherung nach einem der Ansprüche 5 oder 6, **dadurch gekennzeichnet, dass** der Kunststoff eine Shorehärte zwischen 40 und 80 aufweist.

8. Verlustsicherung nach einem der vorhergehenden Ansprüche, **dadurch gekennzeichnet, dass** das mehrere Verankerungsfortsätze (6) vorhanden sind, wobei für jeden Verankerungsfortsatz (6) eine Aufnahmenut (7) im Zapfen (5) vorhanden ist.

9. Verlustsicherung nach einem der vorhergehenden Ansprüche, **dadurch gekennzeichnet, dass** mehrere Verankerungsfortsätze (6) vorhanden sind, wobei die Verankerungsfortsätze (6) und die Aufnahmenuten (7) gleichmäßig über den Umfang des Zapfens (5) angeordnet sind.

10. Verlustsicherung nach einem der vorhergehenden Ansprüche, **dadurch gekennzeichnet, dass** mehrere Verankerungsfortsätze (6) vorhanden sind, wobei die Verankerungsfortsätze (6) und die Aufnahmenuten (7) konzentrisch zur Zapfenmittelachse (Z) angeordnet sind.

11. Verlustsicherung nach einem der vorhergehenden Ansprüche, **dadurch gekennzeichnet, dass** nach Einstecken des zweiten Verbindungselements (3) durch eine Kraft, die entgegen der Einsteckrichtung (E) des zweiten Verbindungselements (3) auf dieses wirkt, der Verankerungsfortsatz (6) unter Vergrößerung der wirksamen Querschnittsfläche des zweiten Verbindungselements (3) auseinandergespreizt ist und so durch Bildung eines Formschlusses einer Bewegung des zweiten Verbindungselements (3) entgegen der Einsteckrichtung (E) entgegensteht.

12. Verlustsicherung nach einem der vorhergehenden Ansprüche, **dadurch gekennzeichnet, dass** der Zapfen (5) in seinem oberen Bereich eine Erweiterung (8) aufweist, die die Beweglichkeit des zweiten Verbindungselements (3) in Einsteckrichtung (E) begrenzt.

13. Verlustsicherung nach einem der vorhergehenden Ansprüche, **dadurch gekennzeichnet, dass** das erste Verbindungselement (2) um die Drehachse (R) des Behälterdeckels (1) drehbar mit dem Behälterdeckel (1) verbunden ist und von einer Ringöse (9) und von einem mit dem Bandstück (4) und der Ringöse (9) verbundenen Anker (10) gebildet ist, wobei die Ringöse (9) im inneren Bereich eine Ausnehmung (11) sowie eine die Ausnehmung (11) mit der äußeren Seite der Ringöse (9) verbindende Einstecknut (12) aufweist, in die der Anker (10) einsetzbar ist und wobei der Anker (10) derart ausgestaltet ist, dass er relativ zur Längsachse (L) des Bandstücks (4) in genau einer Winkelstellung oder in einer beliebigen Winkelstellung in die Ringöse (9) einsetzbar ist.

14. Verlustsicherung nach Anspruch 13, **dadurch gekennzeichnet, dass** der Anker (10) und das Bandstück (4) einstückig ausgebildet sind und aus demselben Material, insbesondere aus Polyoxymethylen (POM) oder einem anderen Kunststoff, gefertigt sind.

15. Verlustsicherung nach einem der Ansprüche 13 oder 14, **dadurch gekennzeichnet, dass** der Anker (10) und die Ringöse (9) aus demselben Material, insbesondere aus Polyoxymethylen (POM) oder einem anderen Kunststoff, gefertigt sind.

16. Verlustsicherung nach einem der Ansprüche 14 oder 15, **dadurch gekennzeichnet, dass** der Kunststoff eine Shorehärte zwischen 40 und 80 aufweist.

## Claims

1. A securing means against loss for a fuel cap (1) of a motor vehicle, in particular, for a fuel tank, with a first end which is attached by means of a first connecting element (2) to said fuel cap, a second end which is attached by means of a second connecting element (3) to the motor vehicle, and a band piece (4) arranged between said first and said second ends, wherein said second connecting element is formed by a plug (5) and at least one anchoring extension (6),
**characterized in that**
said plug (5) on its outer side comprises at least one reception groove (7) and that said anchoring extension (6) projects above said plug in a direction perpendicular to the middle axis (Z) of said plug, is elastically connected with said plug (5) and can be pressed into said reception groove (7).

2. The securing means against loss according to claim 1, **characterized in that** said reception groove (7) extends in the axial direction of said plug (5).

3. The securing means against loss according to claim 1 or 2, **characterized in that** said plug (5) and said anchoring extension (6) are integrally formed.

4. The securing means against loss according to one of the preceding claims, **characterized in that** said second connecting element (3) and said band piece (4) are integrally formed.

5. The securing means against loss according to one of the preceding claims, **characterized in that** said plug (5) and said anchoring extension (6) are manufactured out of the same material, in particular, out of polyoxymethylene (POM) or another plastic.

6. The securing means against loss according to one of the preceding claims, **characterized in that** said second connecting element (3) and said band piece (4) are manufactured out of the same material, in particular, out of polyoxymethylene (POM) or another plastic.

7. The securing means against loss according to one of the claims 5 or 6, **characterized in that** said plastic has a Shore hardness between 40 and 80.

8. The securing means against loss according to one of the preceding claims, **characterized in that** a plurality of anchoring extensions (6) are present, wherein for each anchoring extension (6) a reception groove (7) is present in said plug (5).

9. The securing means against loss according to one of the preceding claims, **characterized in that** a plurality of anchoring extensions (6) are present, wherein said anchoring extensions (6) and said reception grooves (7) are arranged uniformly over the periphery of said plug (5).

10. The securing means according to one of the preceding claims, **characterized in that** a plurality of anchoring extensions (6) are present, wherein said anchoring extensions (6) and said reception grooves (7) are arranged concentrically to the center axis (Z) of said plug.

11. The securing means against loss according to one of the preceding claims, **characterized in that** after insertion of said second connecting element (3) by a force which acts against the insertion direction (E) of said second connecting element (3) on this, said anchoring extension (6) under enlargement of the effective cross-sectional surface of said second connecting element (3) is spread apart and thus through formation of a positive locking opposes a movement of said second connecting element (3) against the insertion direction (E).

12. The securing means against loss according to one of the preceding claims, **characterized in that** said plug (5) in its upper region comprises an expansion (8), which restricts the moveability of said second connecting element (3) in the insertion direction (E).

13. The securing means against loss according to one of the preceding claims, **characterized in that** said first connecting element (2) is rotatably connected with said fuel cap (1) around the rotational axis (R) of said fuel cap (1) and is formed by a ring eyelet (9) and by an anchor (10) connected with said band piece (4) and said ring eyelet (9), wherein said ring eyelet (9) in the inner region comprises a recess (11) and an insertion groove (12) connecting said recess (11) with the outer side of said ring eyelet (9), in which said anchor (10) can be inserted and wherein said anchor (10) is formed such that relative to the longitudinal axis (L) of said band piece (4) it can be inserted in exactly one angular position or in any angular position in said ring eyelet (9).

14. The securing means against loss according to claim 13, **characterized in that** said anchor (10) and said band piece (4) are integrally formed and are manufactured out of the same material, in particular, out of polyoxymethylene (POM) or another plastic.

15. The securing means against lost according to one of the claims 13 or 14, **characterized in that** said anchor (10) and said ring eyelet (9) are manufactured out of the same material, in particular, out of polyoxymethylene (POM) or another plastic.

16. The securing means against loss according to one of the claims 14 or 15, **characterized in that** said plastic has a Shore hardness between 40 and 80.

## Revendications

1. Dispositif de sécurité pour un couvercle de réservoir (1) d'un véhicule automobile, notamment pour un réservoir à carburant, avec une première extrémité qui est fixée au couvercle de réservoir au moyen d'un premier élément de liaison (2), et une deuxième extrémité qui est reliée au véhicule au moyen d'un deuxième élément de liaison (3), ainsi qu'une pièce de ruban (4) située entre la première et la deuxième extrémité, le deuxième élément de liaison étant constitué d'un téton (5) et d'au moins un prolongement d'ancrage (6), **caractérisé en ce que** le téton (5) comporte au moins une rainure d'admission (7) sur sa face externe, et le prolongement d'ancrage (6) dépasse verticalement de l'axe central du téton (Z), tout en étant relié de façon élastique avec le téton (5) et en pouvant être pressé dans la rainure d'admission (7).

2. Dispositif de sécurité selon la revendication 1, **caractérisé en ce que** la rainure d'admission (7) s'étend en direction axiale du téton (5).

3. Dispositif de sécurité selon la revendication 1 ou 2, **caractérisé en ce que** le téton (5) et le prolongement d'ancrage (6) sont constitués d'une seule pièce.

4. Dispositif de sécurité selon l'une des précédentes revendications, **caractérisé en ce que** le deuxième élément de liaison (3) et la pièce de ruban (4) sont constitués d'une seule pièce.

5. Dispositif de sécurité selon l'une des précédentes revendications, **caractérisé en ce que** le téton (5) et le prolongement d'ancrage (6) sont fabriqués à partir d'un même matériau, notamment de polyacétal (POM) ou d'une autre matière synthétique.

6. Dispositif de sécurité selon l'une des précédentes revendications, **caractérisé en ce que** le deuxième élément de liaison (3) et la pièce de ruban (4) sont fabriqués à partir d'un même matériau, notamment de polyacétal (POM) ou d'une autre matière synthétique.

7. Dispositif de sécurité selon la revendication 5 ou 6, **caractérisé en ce que** la matière synthétique présente une dureté de Shore entre 40 et 80.

8. Dispositif de sécurité selon l'une des précédentes revendications, **caractérisé en ce que** plusieurs prolongements d'ancrage (6) sont prévus, une rainure d'admission (7) étant prévue dans le téton (5) pour chacun des prolongements d'ancrage (6).

9. Dispositif de sécurité selon l'une des précédentes revendications, **caractérisé en ce que** plusieurs prolongements d'ancrage (6) sont prévus, les prolongements d'ancrage (6) et les rainures d'admission (7) étant placés de façon régulière sur le pourtour du téton (5).

10. Dispositif de sécurité selon l'une des précédentes revendications, **caractérisé en ce que** plusieurs prolongements d'ancrage (6) sont prévus, les prolongements d'ancrage (6) et les rainures d'admission (7) étant placés de façon concentrique par rapport à l'axe central (10) du téton.

11. Dispositif de sécurité selon l'une des précédentes revendications, **caractérisé en ce que** suite à l'insertion du deuxième élément de liaison (3), le prolongement d'ancrage (6) est écarté sous l'effet de l'agrandissement de la surface de section transversale du deuxième élément de liaison (3), par le biais d'une force agissant sur celui-ci dans le sens contraire à la direction d'insertion (E) du deuxième élément de liaison (3), empêchant ainsi le deuxième élément de liaison (3) d'effectuer un mouvement contraire à la direction d'insertion (E) grâce à une complémentarité de forme.

12. Dispositif de sécurité selon l'une des précédentes revendications, **caractérisé en ce que** le téton (5) comporte un élargissement (8) sur le haut, qui permet de limiter le déplacement du deuxième élément de liaison (3) dans la direction d'insertion (E).

13. Dispositif de sécurité selon l'une des précédentes revendications, **caractérisé en ce que** le premier élément de liaison (2) est relié au couvercle de réservoir (1) de façon à pouvoir effectuer une rotation autour de l'axe de rotation (R) du couvercle de réservoir (1), et constitué d'un anneau (9) et d'une pièce de ruban (4) ainsi que d'une ancre (10) qui est reliée à l'anneau (9), l'anneau (9) comportant un évidement (11) du côté interne ainsi qu'une rainure d'insertion (12) reliant l'évidement (11) avec le côté extérieur de l'anneau (9), dans laquelle l'ancre (10) peut être insérée, l'ancre (10) étant conçue de façon à pouvoir être insérée dans l'anneau (9) selon une position angulaire exacte ou une position angulaire au choix par rapport à l'axe longitudinal (L) de la pièce de ruban (4).

14. Dispositif de sécurité selon la revendication 13, **caractérisé en ce que** l'ancre (10) et la pièce de ruban (4) sont conçues en une seule pièce et à partir du même matériau, notamment de polyacétal (POM) ou d'une autre matière synthétique.

15. Dispositif de sécurité selon la revendication 13 ou 14, **caractérisé en ce que** l'ancre (10) et l'anneau (9) sont constitués d'un même matériau, notamment de polyacétal (POM) ou d'une autre matière synthétique.

16. Dispositif de sécurité selon la revendication 14 ou 15, **caractérisé en ce que** la matière synthétique présente une dureté de Shore entre 40 et 80.
